# EUROPÄISCHE PATENTSCHRIFT

(11) **EP 0 338 328 B1**
(45) Veröffentlichungstag und Bekanntmachung des Hinweises auf die Patenterteilung: **20.01.1993**
(21) Anmeldenummer: 89106019.6
(22) Anmeldetag: 06.04.1989
(51) Int. Cl.: H02B 11/04

(54) **Geschotteter Schaltschrank**
Partitioned switchgear cubicle
Armoire de commutation compartimentée

(30) Priorität: 18.04.1988 DE 3812853
(43) Veröffentlichungstag der Anmeldung: 25.10.1989
(73) Patentinhaber: AEG Sachsenwerk GmbH, D-93053 Regensburg (DE)
(72) Erfinder: Herrmann, Johann, Ing.(grad.), D-8400 Regensburg (DE); Reichl, Erwin, Dipl.-Ing., D-8409 Tegernheim (DE)
(74) Vertreter: Breiter, Achim, Dipl.-Ing.

(56) Entgegenhaltungen:
- EP-A- 0 224 703
- US-A- 1 729 864

## Beschreibung

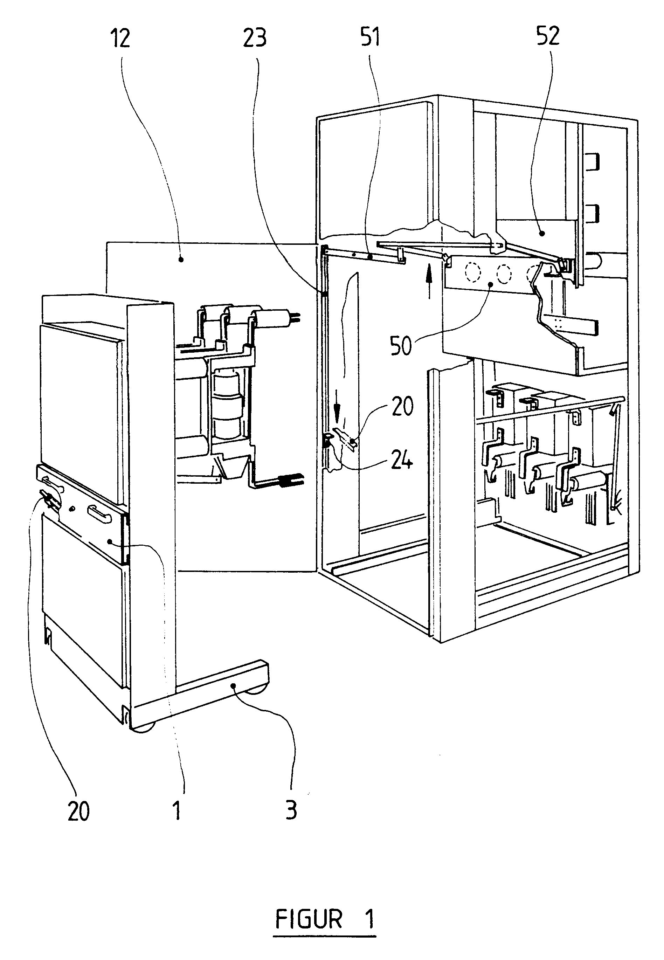

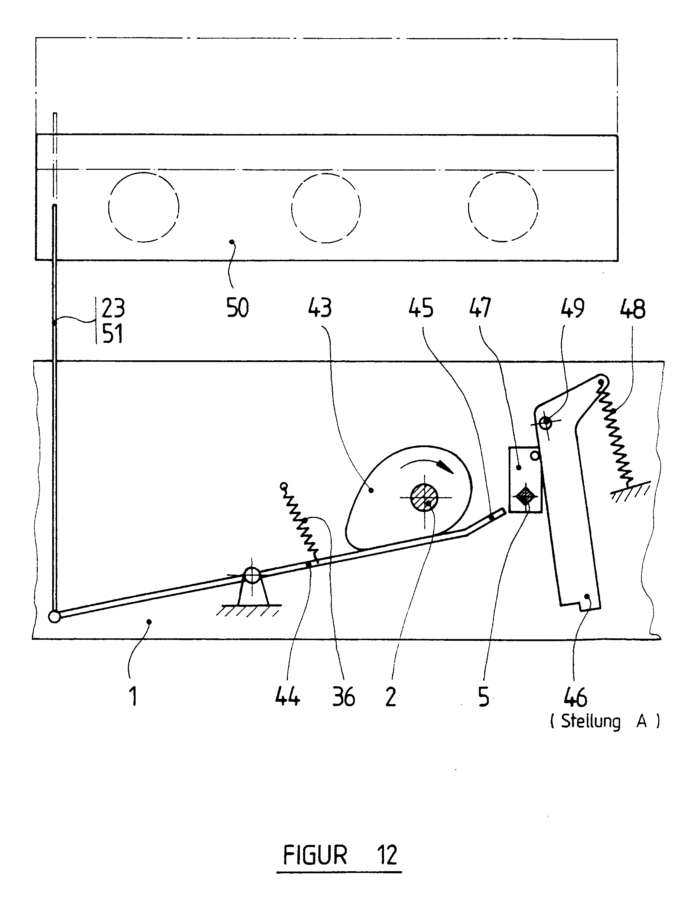

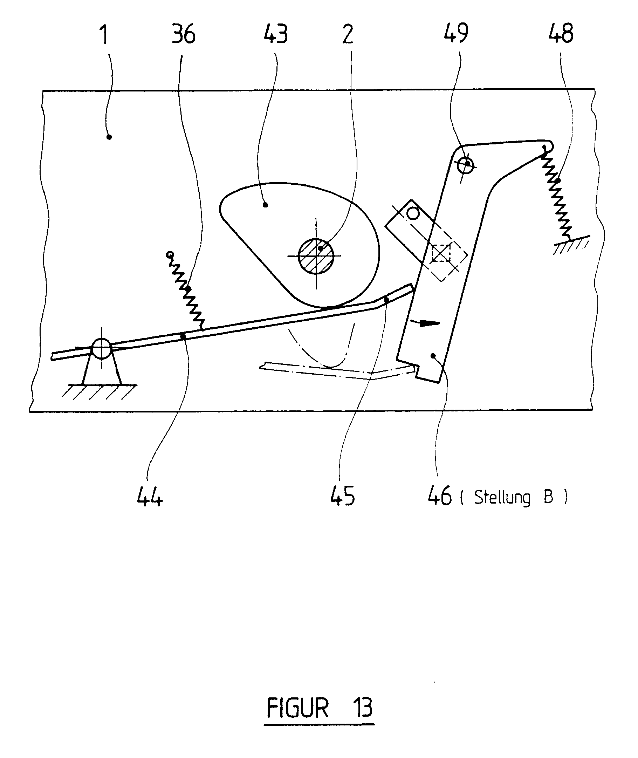

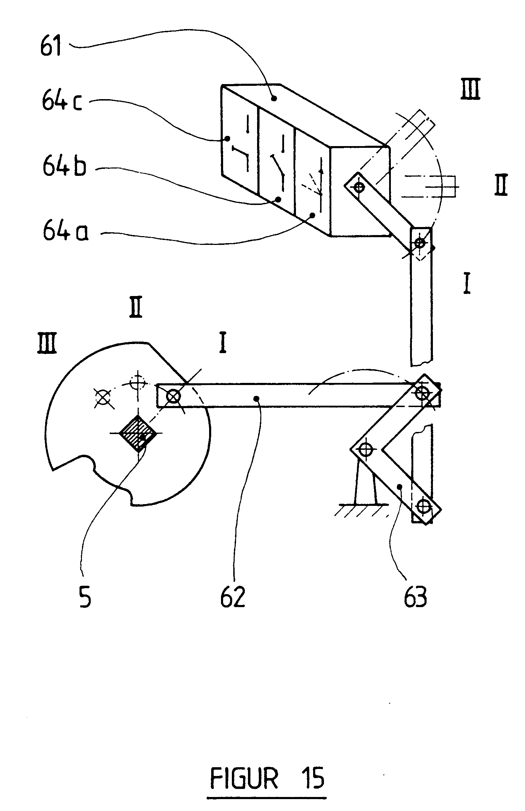

Die Erfindung betrifft einen geschotteten Schaltschrank nach dem Oberbegriff des ersten Patentanspruchs. Ein Schaltschrank der bekannten Art ist in einigen derzeit marktgängigen Typen von Schaltanlagen realisiert worden; er ist außerdem auch in der US-PS 2 563 441 beschrieben. Aus den Figuren 12 bis 19 dieser Druckschrift ist u.a. ein Fahrgestell mit einem Leistungsschalter (70) zu erkennen, dessen Quertraverse (307) in der Trennstellung in die Ausnehmung (306) einer Raste (300) einfällt und das Gerät dadurch gegen unbeabsichtigtes Herausrollen aus dem Schaltschrank sichert. (Figur 13). Aus Figur 15 ist eine Quertraverse (400) mit einer Mutter (410) zu erkennen, in der die Gewindespindel (405) die Drehbewegung einer an der Bedienungsseite (406) angebrachten Handkurbel in eine Vorschubbewegung umsetzt und dabei das Querjoch (412) in Einschubrichtung bewegt. Dadurch wird das Fahrgestell mit dem Leistungsschalter (70) in die Betriebsstellung bewegt und die Einfahrkontakte (34) mit den ortsfesten Trennkontakten (27, 35) in Eingriff gebracht (Figur 1).

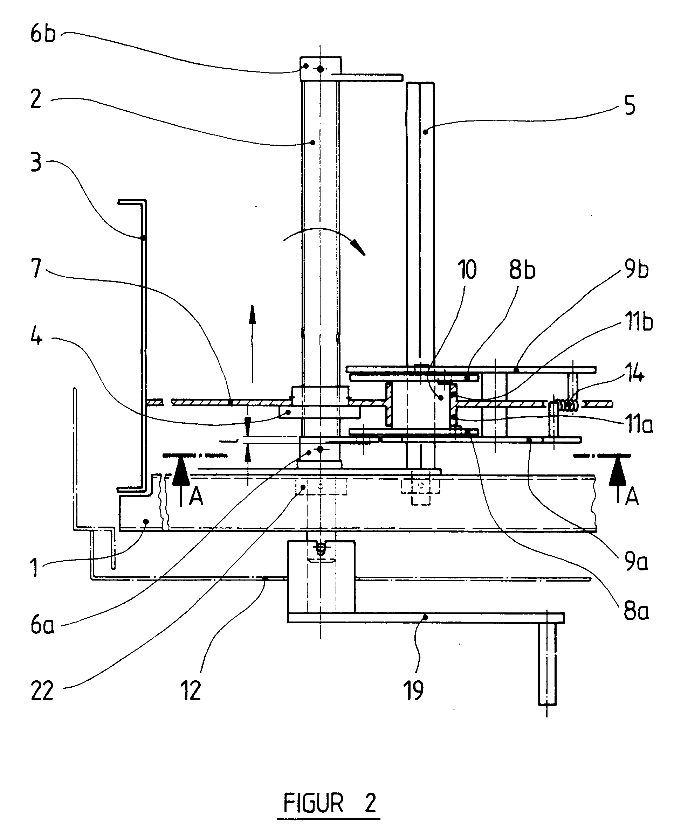

Die in vertikaler Richtung bewegliche Blende (250), die in der Außenstellung des Schalters (70) die Öffnungen (31, 37) verdeckt (Figur 12), wird über ein links und rechts angreifendes Gestänge (271) und dazu gehörige Hebel (273) gesteuert. Beim Einschieben des Schalters (70) heben die an vertikalen Säulen (280) des Fahrgestells befestigten Bolzen (281) die Traversen (273) über deren schräge Steuerkante an und öffnen so die Blende (250), bevor der Schlater (70) in die Trennstellung gelangt (Figur 2).

Bei diesem bekannten Schalter haben die Blenden die Aufgabe, lediglich eine Berührung der an Spannung liegenden, ortsfesten Trennkontakte in der Außenstellung des Leistungsschalters zu verhindern. Sie sind in der Trennstellung bereits geöffnet, was eine Verbindung der drei Funktionsräume (Sammelschiene-, Schalter-, Anschlußraum) zur Folge hat. Dadurch können bei einer beispielsweise im Anschlußraum auftretenden Lichtbogenstörung heiße Gase und andere das Isoliervermögen mindernde Schadstoffe durch die Öffnungen bis in den Sammelschienenraum gelangen und dort eine folgenschwere Folgestörung hervorrufen. In dieser Weise ausgerüstete Schaltanlagen entsprechen nicht mehr den heute üblichen Anforderungen der Betreiber elektrischer Anlagen und werden daher auch nicht mehr angeboten.

In modernen trennerlosen Schaltanlagen werden aber nach wie vor Einschübe oder Fahrgstelle eingesetzt, die eine Antriebstraverse und eine Schraubspindel mit Gewindemutter enthalten, so auch bei Einschubanlagen Typ 8 BJ 20 und 8 BK 20 der Firma Siemens gemäß Katalog HA 25.1.1985.

Die Schraubengetriebe haben den Vorteil, daß die Einschubbetätigung auch bei geschlossener Schaltschranktür ohne zusätzliche Übertragungsglieder, durch Aufsetzen einer Handkurbel möglich ist und daß die Gewindespindeln in Ausfahrrichtung wirkende elektrodynamische Kräfte über die Traverse ohne zusätzliche Sperrglieder problemlos auffangen können, da die verwendeten Gewinde Selbsthemmung aufweisen.

Auch bei diesen bekannten Schaltanlagen werden die Blenden gemäß dem oben angegebenen Katalog durch Verfahren des Einschubs, z.B. aus der Prüf- bzw. Trennstellung in die Betriebsstellung, mit Hilfe eines Scherenantriebs nach oben und unten geschoben. Ein solcher Scherenantrieb ist aus der DE-GM 82 20 008 bekannt, bei dem Öffnen und Schließen der Blenden mittels eines an einem Schaltwagen befestigten Zapfens im Zusammenwirken mit einem in einem drehbaren Hebel angebrachten Gleitschlitz über ein Gestänge bewerkstelligt wird. Da jedoch die vollständige Schottung der drei Räume durch die Blenden bei den neueren bekannten Schaltanlagen auch in der Betriebsstellung des Einschubs bzw. Schaltwagens erhalten bleiben muß, bedeutet der bekannte Mechanismus eine Vergrößerung der Tiefe der Schaltanlage um den zur Öffnung der Blenden erforderlichen Weg.

Derartige geschotteten Schaltschränke sind auch aus der EP-A-0 224 703 und der US-A-1 729 864 bekannt.

Die Aufgabe der Erfindung wird darin gesehen, die Betätigung der Blende für geschottete Schaltschränke der im Oberbegriff des Anspruchs 1 angegebenen Art so auszulegen, daß die Tiefe der Schaltschränke minimiert wird und die Betätigungskräfte dabei nicht über das Fahrgestell bzw. den Einschub übertragen werden.
Die gestellte Aufgabe wird durch folgende Merkmale gelöst:
a) die Öffnung der Blende (50) erfolgt durch Drehung der Gewindespindel (2) während des Anfangsdrehwinkels (α₁),
b) die geöffnete Blende (50) ist durch eine Sperre offengehalten, die von einer in der Traverse 1 drehbar gelagerten und in Achsrichtung fixiert angebrachten Steuerwelle (5) gesteuert ist,
c) die Sperre gibt in der Trennstellung des Leistungsschalters die Blende (50) frei,
d) die Steuerwelle (5) ist durch die Gewindespindel (2) mittels eines Schrittschaltwerks in mindestens zwei Stellungen (I, II) einstellbar, von denen eine Stellung der geöffneten Blende (50) entspricht, und
e) in der Traverse (1) sind Übertragungsglieder, vorzugsweise als Hebelgetriebe, vorgesehen, die die Öffnungsbewegung von der Gewindespindel (2) über das Gestänge (51) auf die Blende (50) übertragen.

Die Lösung nutzt das große Übersetzungsverhältnis eines Schraubengetriebes dazu, die Öffnungsbewegung der Blenden von der Drehbewegung der Gewindespindel während der ersten Umdrehung desselben abzuleiten, während gleichzeitig der Vorschub an der Schraubenmutter, also die Bewegung des Fahrgestells in Richtung Betriebsstellung vor allem bei eingängigen Schrauben nur maximal gleich der Steigung derselben ist, also wenige Millimeter nicht übersteigt. Für die Bewegungsableitung können in vorteilhafter Weise die kinematischen Möglichkeiten genutzt werden, die Kurven- oder Gelenkgetriebe bieten. Durch die Erfindung wird als weiterer Vorteil eine Sperrung der Blenden in ihrer Offenstellung ohne Rückwirkungen auf die Bewegung des Fahrgestells ermöglicht.

In den Unteransprüchen sind zweckmäßige Formen der Aus- und Weiterbildung des Erfindungsgedankens angegeben.

Zum besseren Verständnis der Erfindung verweisen wir auf die folgenden Zeichnungen:
- Figur 1: Übersicht eines geschotten Schaltschrankes in perspektivischer Darstellung, zum Teil aufgebrochen;
- Figur 2: Horizontalschnitt von Schraubengetriebe und Steuerungsmechanismus; Leistungsschalter in Trennstellung;
- Figur 3: wie Figur 2, jedoch Leistungsschalter in Betriebsstellung;
- Figur 4: Schnitt A-A; Steuerungsmechanismus in Trennstellung;
- Figur 5: wie Figur 4, Steuerungsmechanismus in Betriebsstellung;
- Figur 6: wie Figur 4, Steuerungsmechanismus in einer Zwischenstellung;
- Figur 7: Schnitt B-B, Betätigung der Blenden mittels Kulissenführung; Leistungsschalter in Trennstellung;
- Figur 8: wie Figur 7; Leistungsschalter in Zwischen- und in Betriebsstellung;
- Figur 9: Draufsicht zu Figur 7;
- Figur 10: Betätigung der Blenden mittels Viergelenkkette, Leistungsschalter in Trennstellung;
- Figur 11: wie Figur 10; Leistungsschalter in einer Zwischenstellung und in Betriebsstellung;
- Figur 12: Betätigung der Blenden mittels Kurventrieb; Leistungsschalter in Trennstellung;
- Figur 13: wie Figur 12; Leistungsschalter in Betriebsstellung bzw. in einer Zwischenstellung;
- Figur 14: Draufsicht zu Figur 12;
- Figur 15: Betätigung eines Steuerschalters. (Schematische Darstellung);
- Figur 16: Vereinfachter Steuerungsmechanismus; Schnitt D-D aus Figur 14; Trennstellung;
- Figur 17: wie Figur 16; Zwischenstellung und Betriebsstellung.

Die Erfindung wird an einem geschotteten Schaltschrank nach Figur 1 erläutert. Im ortsfesten Teil sind oben drei übereinander liegende Sammelschienen und darunter ein Anschlußraum mit drei Stromwandlern und einem Erdungsschalter dargestellt. Der Sammelschienenraum ist durch die Schottung 52 abgedeckt, während der Anschlußraum in diesem Fall offen zugänglich ist. Das Fahrgestell 3 mit dem Leistungsschalter befindet sich in der Außenstellung, die Tür 12 des Schaltschranks ist geöffnet.
Die Blende 50 verdeckt in ihrer Schließstellung die Öffnungen in der Schottung 52, hinter denen sich jeweils ein Trennkontakt für die einzelnen Phasen der Sammelschienen befindet. Zur Betätigung der Blende 50 ist ein Gestänge 51 vorhanden, das an der linken Seitenwand des Schaltschranks zu einer in vertikaler Richtung längs verschieblichen Stange 23 führt, an der ein Mitnehmer 24 befestigt ist.

In der Antriebstraverse 1 des Fahrgestells 3 sind Teile des Vorschubantriebs für den Leistungsschalter und ein Steuerungsmechanismus für die Betätigung er Blenden und von Steuerungen und Verriegelungen untergebracht. An ihrem linken Ende ist die Traverse 1 in aufgebrochener Darstellung mit einem Teil eines Hebels 20 gezeigt. Dieser Hebel 20 greift in der Trennstellung des Leistungsschalters zur Übertragung der Öffnungsbewegung der Blende 50 an dem Mitnehmer 24 an, mit dem er dabei zur Öffnung der Blende 50 eine formschlüssige Verbindung eingeht. Die Antriebstraverse 1 wird in der Trennstellung des Leistungsschalters mit dem Gerüst des Schaltschranks lösbar verbunden. Nach Schließung der Tür 12 des Schaltschranks kann durch Drehung mit einer auf die Gewindespindel 2 des Schrankgetriebes aufsteckbaren Handkurbel das Fahrgestell 3 mit dem Leistungsschalter in die Betriebsstellung gefahren werden.

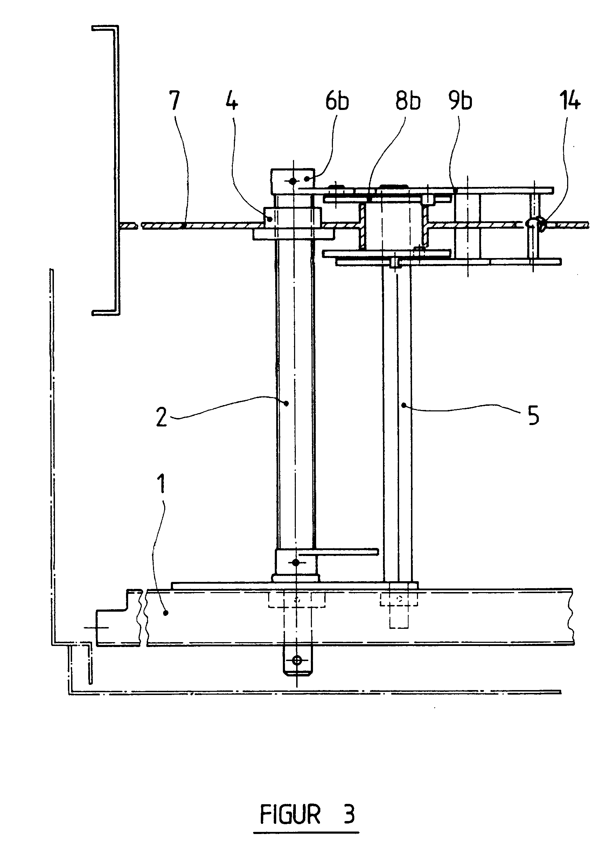

Der Vorschubantrieb des Fahrgestells 3 besteht aus einer Gewindespindel 2, die an ihrem frontseitigen Ende, z.B. mit einer aufsteckbaren Handkurbel 19 gedreht werden kann. Die Gewindespindel 2 ist in der Antriebstraverse 1 durch Stellringe 22 oder ähnliches axial fixiert und arbeitet mit einer Spindelmutter 4 zusammen, die fest mit der Frontplatte 7 des Fahrgestells 3 verbunden ist. Bei fortgesetzter Drehung der Gewindespindel 2 im Uhrzeigersinn gelangt das Fahrgestell 3 mit dem Schalter aus der Trenn- (Figur 2) in die Betriebsstellung (Figur 3). Erfindungsgemäß ist in der Traverse 1 noch eine achsparallele Steuerwelle 5 drehbar und axial fixiert gelagert, die zur Betätigung der Blendenstellung und von Steuerungs- und Verriegelungsaufgaben dient.

Die Steuerwelle 5 wird von der Gewindespindel 2 mittels eines Schrittschaltwerkes betätigt, das aus je einem am vorderen und hinteren Ende der Gewindespindel 2 befestigten Mitnehmer 6a bzw. 6b, je einer mit der Steuerwelle 5 drehbaren und auf ihr in Achsrichtung verschiebbaren Kurvenscheibe 8a bzw. 8b und je einem an der Frontplatte 7 drehbar gelagerten Sperrhebel 9a bzw. 9b besteht. Zweckmäßiger Weise ist die Steuerwelle 5 im für die verschiebbaren Kurvenscheiben 8a, 8b vorgesehenen Teil nicht zylindrisch, sondern z.B. als Vierkant oder Keilwelle ausgeführt.

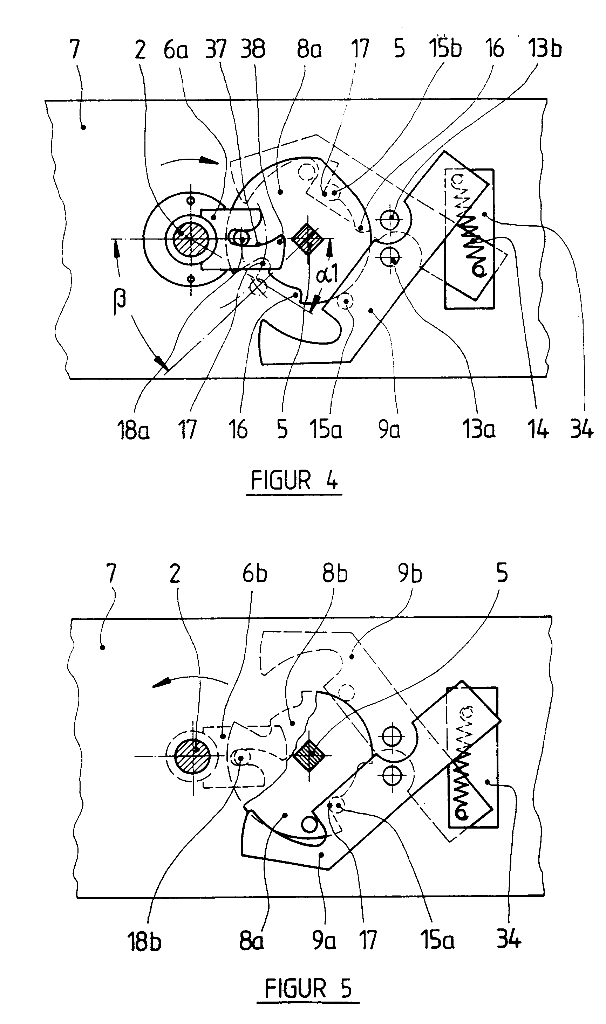

Die beiden Kurvenscheiben 8a und 8b sind auf einer gemeinsamen Nabe 10 befestigt und gegen die Frontplatte 7 durch Abstandsstücke 11a, 11b oder ähnliches distanziert. Sie werden damit durch den von der Drehung der Gewindespindel 2 über die Spindelmutter 4 auf das Fahrgestell 3 und somit auf die Frontplatte 7 vermittelten Vorschub in Richtung der Betriebsstellung mitgenommen. Zu Beginn dieser Vorschubbewegung ist die Nut 37 im Mitnehmer 6a mit dem Bolzen 18a in Eingriff. (Figur 4). Dadurch wird bei einer Drehung der Gewindespindel 2 um den Anfangswinkel α₁ die Steuerwelle 5 um den Winkel β verstellt und dort eingerastet, wie noch im einzelnen erläutert werden wird. Beim Weiterdrehen der Gewindespindel 2 wird hervorgerufen durch den dabei erzeugten Vorschub des Fahrgestells 3 nach etwa einer vollen Umdrehung die Kurvenscheibe 8a mit dem Bolzen 18a aus der Ebene des Mitnehmers 6a herausbewegt sein und keine Eingriffsmöglichkeit mehr haben. Sowohl Winkel α₁ als auch Winkel β können etwa 45 ° betragen.

Die beiden Sperrhebel 9a, 9b haben exzentrisch angeordnete Drehpunkte 13a bzw. 13b, sie werden durch die Kraft einer gemeinsamen Feder 14 (oder zweiter getrennter Federn) über jeweils seitlich angeordnete Nasen 15a und 15b gegen die Kurvenscheiben 8a bzw. 8b gedrückt. Dabei nehmen sie je nach Schrittstellung bestimmte Rastpositionen 16 und 17 in den Kurvenscheiben 8a bzw. 8b ein.

So steht in Figur 4 (Teststellung) die Steuerwelle in Stellung I, der Sperrhebel 9a außerhalb der Rastpositionen und der Sperrhebel 9b in Rastposition 17.

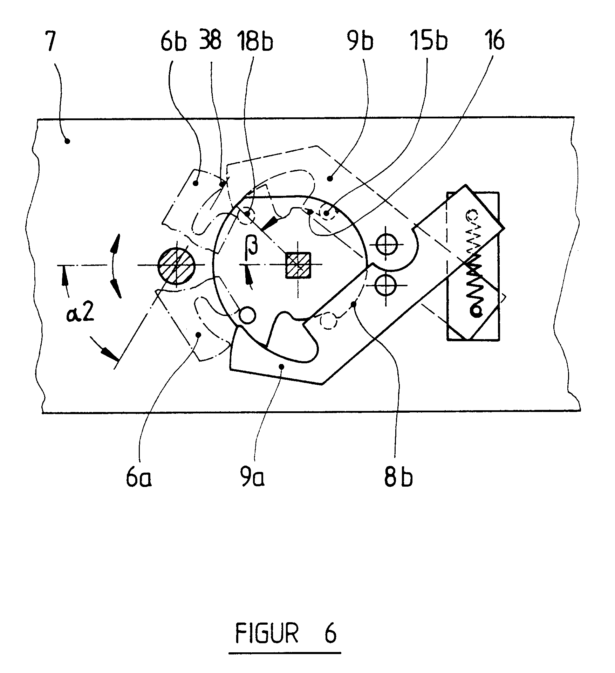

In Figur 5 (Betriebsstellung) steht die Steuerwelle 5 in Stellung III, es befindet sich der Sperrhebel 9a in Rastposition 17 und Sperrhebel 9b außerhalb einer Rastposition. In den Zwischenstellungen nach Figur 6 steht die Steuerwelle 5 in Stellung II, es sind beide Sperrhebel 9a und 9b in einer Rastposition 16. Das Fahrgestell 3 nimmt dabei mit dem Leistungsschalter eine beliebige Stellung zwischen der Trenn- und der Betriebsstellung ein.

Der Ablauf einer Einfahrbewegung des Schalters mit seinem Fahrgestell 3 läuft wie folgt ab:
Das Fahrgestell 3 befindet sich in der Trennstellung (Figur 2), die Traverse 1 ist am Gerüst des Schaltschranks lösbar befestigt, die Tür 12 ist verschlossen. Nach Aufstecken einer Handkurbel 19 wird diese im Uhrzeigersinn in Drehung versetzt. Bei fernbedienten Schaltanlagen kann auch ein Motorantrieb zur Anwendung gelangen.

Während des Anfangsdrehwinkels α₁ (Figur 4) wird die Steuerwelle 5 aus der Stellung I um den Winkel β in die Stellung II gedreht, gleichzeitig wechselt der hintere Sperrhebel 9b aus der Rastposition 17 in die Rastposition 16 der Kurvenscheibe 8b. Die Steuerwelle 5 ist nun gemäß Figur 6 in Stellung II durch die beiden Sperrhebel 9a und 9b fixiert und mit der Gewindespindel 2 weder in kraft- noch in formschlüssiger Verbindung. - Durch weitere Drehungen an der Gewindespindel 2 wird das Fahrgestell 3 in Richtung der Betriebsstellung gebracht. Kurz vor Erreichung der Betriebsstellung kommt der Sperrhebel 9b und der Bolzen 18 b in die Schwenkebene des Mitnehmers 6b. Letzterer drückt während des letzten Teils der letzten Umdrehung mit seiner Begrenzung 38 den Sperrhebel 9b mit seiner Nase 15b aus der Rastposition 16 der Kurvenscheibe 8b,bevor er mit seiner Nut mit dem Bolzen 18b in Eingriff kommt und über dessen Kurvenscheibe 8b die Steuerwelle 5 in die Stellung III gemäß Figur 5 dreht. Der Sperrhebel 9a fällt mit seiner Nase 15a in die Rastposition 17 der Kurvenscheibe 8a ein und die Betriebsstellung ist erreicht und fixiert.

Für die umgekehrte Bewegung des Leistungsschalters aus der Betriebs- in die Trennstellung gilt ein analoger Ablauf der Steuer- und Sperrglieder bei entgegengesetzter Drehrichtung beider Wellen (2, 5). Dazu ist auf Figur 6 strichpunktiert noch die Stellung des Mitnehmers 6a bei Beginn der Umschaltung des Sperrhebels 9a aus der Rastposition 16 angegeben.

Von der Steuerwelle 5 kann nach einem weiteren Erfindungsmerkmal z.B. ein Hilfsschalter betätigt werden, der geeignet ist, auch strenge Bestimmungen bezüglich der Anzeige der Betriebs- oder Trennstellung einzuhalten. Daß die Umschaltung der Steuerwelle 5 während eines Winkels α₁ der Gewindespindel 2, der etwa 45 ° ist, am Anfang oder am Ende eines Einschub- oder Ausziehvorgangs erfolgt, bedeutet für den Vorschub einen Weg von nur einem Bruchteil eines Millimeters. Dabei ist ein eingängiges Schraubgetriebe mit einer Steigung von etwa 5 mm zugrunde gelegt. Von der Steuerwelle 5 können auch mechanische Verriegelungen abgeleitet werden, wie z.B. die Blockierung der Einschaltmöglichkeit des Leistungsschalters in allen Stellungen zwischen der Trenn- und Betriebsstellung.

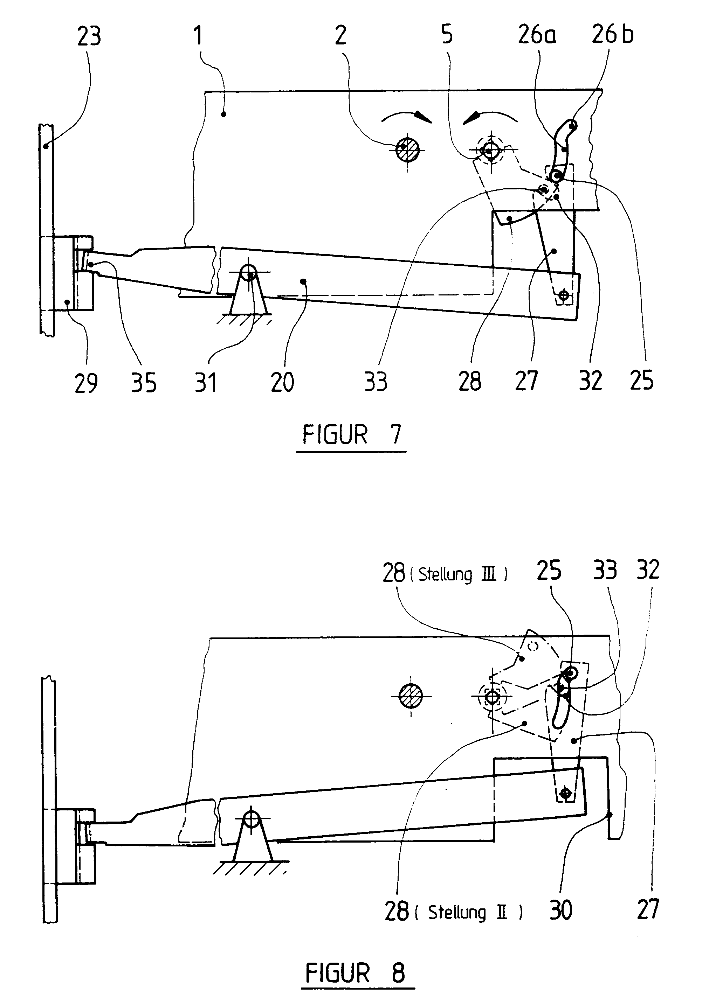

In den Figuren 7, 8 und 9 ist ein Betätigungsmechanismus für die Blende 50 angegeben. Hinter der Traverse 1 ist drehbar mit der Steuerwelle 5 verbunden ein Mitnehmer 28 sowie eine Lasche 27 angeordnet. Letztere ist an dem Hebel 20 angelenkt und mit ihrem oberen Ende mittels einem Bolzen 25 in einer Kulisse geführt, die in die Traverse 1 oder einer zusätzlichen Lagerplatte eingearbeitet ist. Die Kulisse besteht aus dem bogenförmigen Abschnitt 26a, dessen Mittelpunkt mit dem Mittelpunkt der Steuerwelle 5 zusammenfallen kann, sowie dem Rastabschnitt 26b.

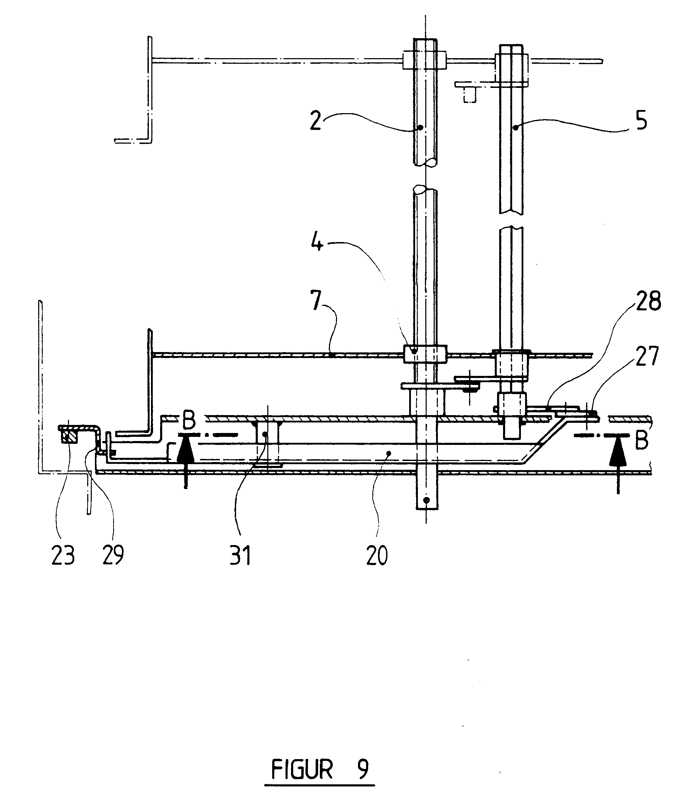

Der Hebel 20 ist mit seinem Drehpunkt 31 ebenfalls in der Traverse 1 gelagert und greift nach Figur 1 mit seinem linken Ende an dem Mitnehmer 24 der Stange 23 an, die zum Gestänge 51 für die Betätigung der Blende 50 gehört. Der Mitnehmer kann auch als Klaue 29 und das zugehörige Ende des Hebels 20 als Finger 35 ausgebildet sein, um so eine formschlüssige Mitnahme der Blende 50 beim Öffnen und Schließen zu erreichen. An der Verbindungsstelle zur Lasche 27 ist der Hebel 20 abgekröpft, um im Ausschnitt 30 der Traverse 1 in eine gemeinsame Verbindungsebene mit der Lasche 27 zu kommen. (Figur 9).

Die Lasche 27 weist außerdem eine Ausnehmung 32 auf, die mit dem Bolzen 33 des Mitnehmers 28 zusammenarbeitet, um am Ende der Ausfahrbewegung des Leistungsschalters kurz vor Erreichen der Trennstellung die formschlüssige Rückführung der Blenden 50 in die geschlossene Stellung zu bewirken.

Bei der Bewegung des Leistungsschalters von der Trennstellung in die Betriebsstellung wird, wie schon vorher beschrieben, zu Beginn die Steuerwelle 5 in die Stellung II gedreht. In Figur 7 ist die Stellung I dargestellt, bei Drehung in die Stellung II nimmt nun der Mitnehmer 28 über den Bolzen 25 die Lasche 27 und mit ihr letztlich die Blende 50 längs des Kulissenabschnittes 26a mit und drückt abschließend den Bolzen 25 in die Raststellung 26b. In Figur 8 ist die Stellung II der Steuerwelle 5 erreicht, der Mitnehmer 28 (gestrichelt dargestellt) blockiert den Bolzen 25 in der Raststellung bei geöffneter Blende. In allen anschließenden Zwischenstellungen des Leistungsschalters ist die Blendenbetätigung von der Gewindespindel 2 abgekoppelt. Bei Erreichen der Betriebsstellung wird, wie vorher beschrieben, die Steuerwelle 5 in Stellung III verdreht (Mitnehmer 28 in strichpunktierter Stellung), der Bolzen 25 bleibt dabei blockiert.

Soll der Leistungsschalter aus der Betriebsstellung in die Trennstellung ausgefahren werden, so erfolgt zu Beginn der Drehung der Gewindespindel 2 im Gegenuhrzeigersinn, wie weiter oben angegeben, die Drehung der Steuerwelle 5 aus der Stellung III in die Stellung II. Dabei bleibt nach Figur 8 die Lasche 27 mit dem gesamten Gestänge und der angekoppelten Blende 50 noch weiter in der Offenstellung. Die Sperrung zwischen Bolzen 25 und Mitnehmer 28 bleibt dabei bestehen. Im Verlauf der letzten Umdrehung der Gewindespindel 2, kurz bevor der Leistungsschalter mit dem Fahrgestell 3 wieder die Trennstellung erreicht hat, wird die Steuerwelle 5 in die Stellung I zurückgedreht. Dabei greift der Bolzen 33 an der Ausnehmung 32 an und bewirkt eine sichere, von der Einwirkung von Reibungskräften oder sonstigen Hindernissen unabhängige Schließung der Blende 50.

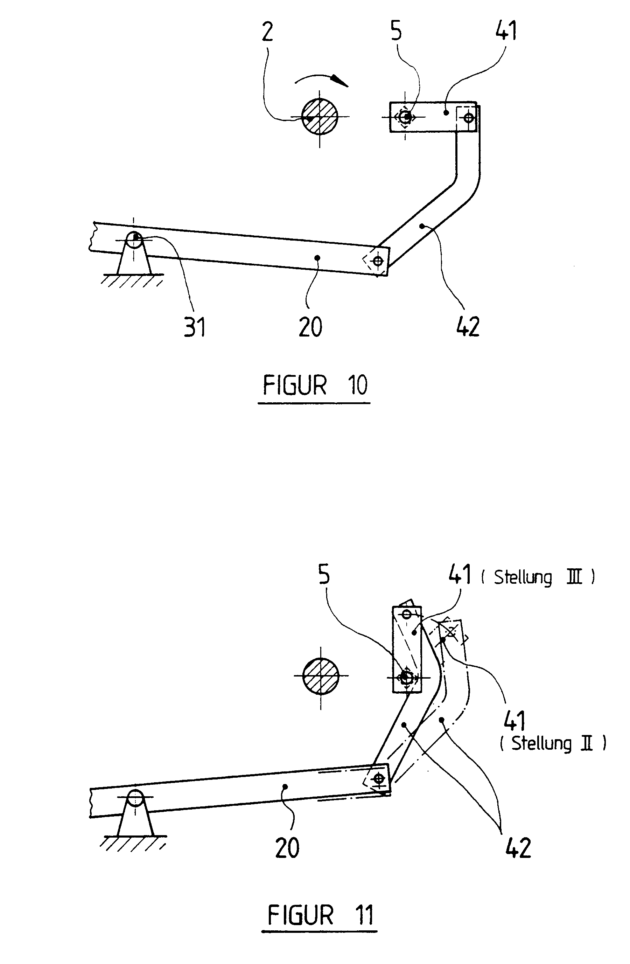

In Figur 10 und 11 ist eine weitere Betätigungsmöglichkeit der Blenden mittels einer sogenannten Viergelenkkette in schematischer Darstellung angegeben. Auf der Steuerwelle 5 ist dazu ein Hebel 41 befestigt, der über eine gekröpfte Koppelstange 42 mit dem Hebel 20 verbunden ist. Die weitere Ankopplung der Blendenbetätigung an den Hebel 20 entspricht dabei beispielsweise der Anordnung in den Figuren 7 und 8. Beim Verlassen der Trennstellung des Leistungsschalters schaltet, wie schon beschrieben, die die Steuerwelle 5 aus Stellung I in die Stellung II (Figur 11) um und nimmt dabei über die Koppelstange 42 den Hebel 20 mit. Die Blende 50 wird dabei soweit geöffnet, daß die Einfahrkontakte des Leistungsschalters in die Öffnungen der Schottung 52 einfahren können. Von der Blende oder eventuell vorhandenen Rückzugsfedern geäußerte Reaktionskräfte üben bei dieser Ausführung ein Drehmoment auf die Steuerwelle 5 aus und belasten die Sperrhebel 9a und 9b. Bei Erreichen der Betriebsstellung schaltet die Steuerwelle 5 in die Stellung III und führt die Koppelstange 42 über den Totpunkt in eine Selbsthaltestellung, in der kein nennenswertes Drehmoment auf die Steuerwelle 5 mehr geäußert wird. Auf dem Weg von Stellung II in Stellung III legen der Hebel 20 und mit ihm die Blende 50 noch einen weiteren kleinen Weg in Öffnungsrichtung zurück.

Die an den Figuren 10 und 11 angegebene Ankoppelung der Steuerwelle 5 an die Blendenbetätigung sichert ebenfalls eine zwangsläufige Schließung der Blende 50 bei Rückkehr des Leistungsschalters in die Trennstellung.

Die beiden beschriebenen Ausführungen der Blendenbetätigung arbeiten mit einem relativ kleinen Winkel α₁ zur Umstellung der Blenden aus der Schließ- in die Offenstellung und umgekehrt.

Die dabei aufzubringenden Betätigungskräfte, die von den Massen der bewegten Teile und den Bewegungswiderständen abhängen, können bei größeren Blendenanordnungen relativ groß werden. Die Erfindung sollte in einer abgewandelten Ausführung dieser Problematik Rechnung tragen. Dies wird in dem folgenden Ausführungsbeispiel erläutert.

Die beiden bisher beschriebenen Betätigungsmechanismen für die Blenden werden von einer Steuerwelle gesteuert, die Stellungen I, II und II aufweist: Die Umschaltung aus der Stellung I in die Stellung II zur Öffnung der Blenden erfolgt auf dem ersten Teil der ersten Umdrehung der Gewindespindel, der Leistungsschalter hat sich dabei kaum wahrnehmbar nur um Bruchteile von Millimetern bewegt. Auch die Freistellung des Schalters und seines Fahrgestells von Kräften, die von den Blenden verursacht werden, erfolgt in der Stellung II. Einen Bruchteil einer Umdrehung der Gewindespindel vor Erreichen der Betriebsstellung erfolgt dann die Umschaltung der Steuerwelle in die Stellung III, ohne daß sich an der Stellung der Blenden dabei etwas ändert.

Der Steuerungsmechanismus mit drei Stellungen der Steuerwelle wird nicht wegen der Betätigung der Blenden, sondern wegen anderer Funktionen der Einfahrtechnik in vielen Fällen benötigt. So kann man z.B. die Verriegelungsbedingungen sehr exakt einhalten.

In Figur 15 ist als Beispiel die Betätigung eines Steuerschalters 61 dargestellt, der eine Reihe von Schließ- und Öffnungskontakten haben kann. Der Steuerschalter 61 wird von der Steuerwelle 5 über ein Gestänge 62, eventuell unter Zwischenschaltung eines Winkelhebels 63 betätigt.
In der Stellung I sind dabei die Kontakte 64 a geschlossen, die die Trennstellung anzeigen oder eine Verriegelungsfunktion herstellen sollen. Bei der Umschaltung in die Stellung II öffnen diese Kontakte, dafür schließen jene, (64b) die gegebenenfalls in der Zwischenstellung andere Steuerungsorganen anschließen sollen, während wieder andere (64c) nur in Stellung III zur Anzeige der Betriebsstellung geschlossen sein sollen.

Anstelle des Steuerschalters 61 können in der beschriebenen Weise auch andere Funktionen gesteuert werden, wie z. B. eine mechanische Verriegelung, die eine Betätigung des Einschaltmechanismus des Leistungsschalters in Stellung II verhindert und andere notwendige Verriegelungs- und Anzeigefunktionen.

Für Betätigungseinrichtungen, die mit vertretbaren Betätigungskräften auch größere Gegenkräfte bewältigen können, wie sie beispielsweise bei Doppelblenden in Schaltschränken für 36 kV auftreten können, wurde nach einem weiteren Merkmal der Erfindung der folgende, in den Figuren 12 bis 14 schematisch dargestellte Mechanismus vorgeschlagen:
In der Traverse 1 ist auf der Gewindespindel 2 eine Kurvenscheibe 43 befestigt, die mit einem Hebel 44 zusammenarbeitet. Das rechte Ende desselben ist als Klinke 45 ausgebildet, die bei geöffneter Blende 50 mit einem um den Bolzen 49 drehbaren Sperrhebel 46 verklinkt;letzterer wird von der Steuerwelle 5 über den Nocken 47 im Zusammenwirken mit einer Feder 8 in zwei Stellungen gesteuert. In Figur 12 (Trennstellung) steht die Steuerwelle 5 in Stellung I, der Nocken 47 hält den Sperrhebel 46 in Stellung A gegen die Kraft der Feder 48.

In Figur 13 (Zwischenstellung oder Betriebsstellung) steht die Steuerwelle 5 in Stellung II, der Sperrhebel 46 stützt sich unter der Wirkung der Feder 48 an der Vorderkante der Klinke 45 ab. Die Kurvenscheibe 43 dreht den Hebel 44 auf einem Winkel von etwa 320 ° in die Stellung, in der die Blende 50 voll geöffnet ist. Der Sperrhebel 46 verrastet in seiner Stellung B mit der Klinke 45 und hält so auf dem weiteren Weg des Leistungsschalters die Blende 50 offen, ohne daß auf das Fahrgestell 3 dadurch Kraftwirkungen ausgeübt werden.

Bei den zuletzt beschriebenen Mechanismus wird die Steuerwelle 5 nur in den Stellung I und II eingesetzt, wobei die Stellung I der Trennstellung und die Stellung II der Betriebs- und der Zwischenstellung des Fahrgestells 3 mit dem Leistungsschalter entspricht. Dieser vereinfachte Steuerungsmechanismus ist in den Schaltanlagen einsetzbar, in denen die weiter oben beschriebenen Steuerungs- und Verriegelungsaufgaben wie in vielen bekannten Ausführungen in nicht so exakter Weise von der Bewegung des Fahrgestells abgeleitet werden.

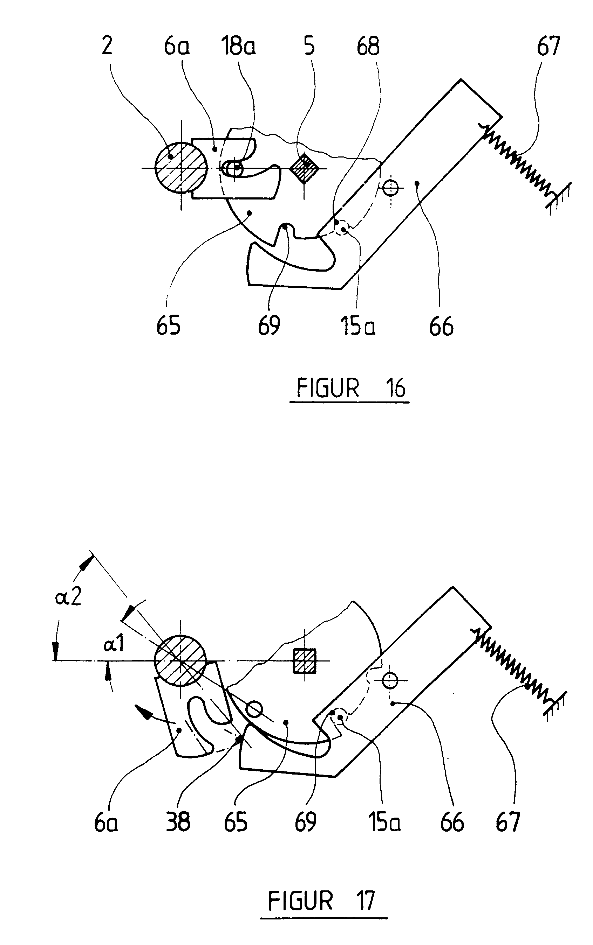

Der vereinfachte Steuerungsmechanismus ist in den Figuren 16 und 17 dargestellt. Der Mechanismus entspricht einer Hälfte des in den Figuren 4 bis 6 gezeigten Schrittschaltwerkes mit einem Mitnehmer 6a, der über den Bolzen 18a die Kurvenscheibe 65 und somit die Steuerwelle 5 verdrehen kann. Ein Sperrhebel 66 wird mittels der Feder 67 und der Nase 15a in die Raststellungen der Kurvenscheibe 65 gedrückt. In Figur 16 ist das Schrittschaltwerk in der Trennstellung des Leistungsschalters gezeigt, die Nase 15a sichert dabei die Steuerwelle 5 in Stellung I durch Einliegen in der Rastposition 68. Die Verstellung der Steuerwelle 5 in die Stellung II, die in diesem Fall sowohl der Zwischenstellung als auch der Betriebsstellung des Leistungsschalters entspricht, erfolgt wie bei dem in den Figuren 4 bis 6 angegebenen Schaltwerk. In Figur 17 ist der Sperrhebel 66 in die Rastposition 69 eingefallen, der Mitnehmer 6a dreht dabei mit der Gewindespindel 2 weiter, um den Leistungsschalter bis zur Betriebsstellung zu transportieren. Die dem Schrittschaltwerk zugeordneten Bauteile arbeiten auch auf dem Rückweg aus der Betriebs- in die Trennstellung, wie zu den Figuren 4 bis 6 beschrieben.

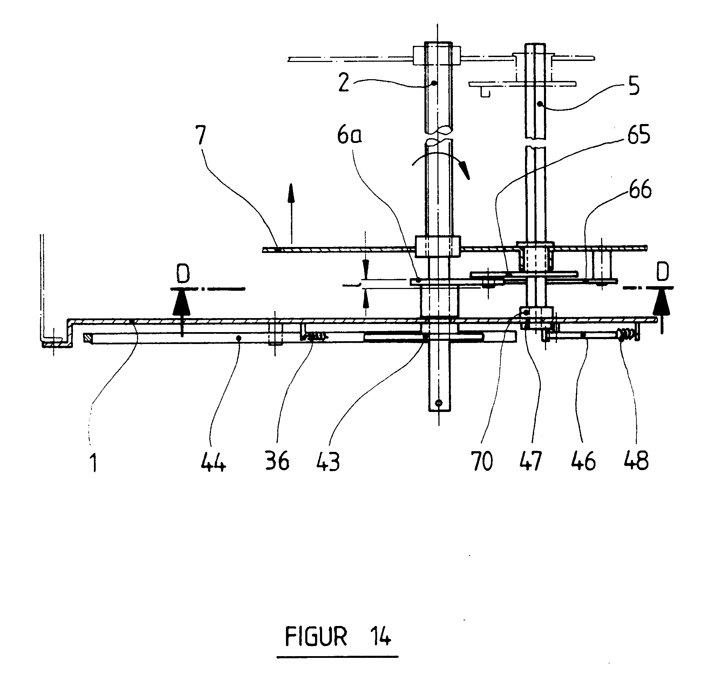

In Figur 14 ist dabei zu erkennen, daß die Kurvenscheibe 65 mit ihrer Nabe an der Frontplatte 7 in Achsenrichtung der Steuerwelle 5 fixiert ist. Außerdem erfordert der in den Figuren 12 und 13 angegebene Betätigungsmechanismus für die Blende 50 eine axiale Lagersicherung der Steuerwelle 5 in der Traverse 1, die hier durch den Nocken 47 und einen Ring 70 auf der anderen Seite der Traverse 1 erfolgt.

## Patentansprüche

1. Geschotteter Schaltschrank mit einem zwischen einer Trenn- und einer Betriebsstellung bewegbaren Leistungsschalter, dessen Einfahrkontakte mit Gegenkontakten im Sammelschienen- und Anschlußbereich in Verbindung bringbar sind,
- mit wenigstens einer Blende (50), die Öffnungen in der Schottwand (52) in der Betriebsstellung zum Durchtritt der Einfahrkontakte freigibt und dieselben in der Trennstellung verschließt, und die in Abhängigkeit von der Bewegung des Leistungsschalters über ein Gestänge (51) betätigbar ist, und mit einem die Bewegung des Leistungsschalters erzeugenden Schraubengetriebe, dessen beispielsweise durch eine Handkurbel (19) drehbare Gewindespindel (2) in einer im Gehäuse des Schaltschranks lösbar angebrachten Traverse (1) in achsialer Richtung fixiert ist und dessen Mutter (4) an einem den Leistungsschalter aufnehmenden Fahrgestell (3) festgelegt ist,
**gekennzeichnet** durch folgende Merkmale:
a) die Öffnung der Blende (50) erfolgt durch Drehung der Gewindespindel (2) während des Anfangsdrehwinkels (α₁),
b) die geöffnete Blende (50) ist durch eine Sperre offengehalten, die von einer in der Traverse (1) drehbar gelagerten und in Achsrichtung fixiert angebrachten Steuerwelle (5) gesteuert ist,
c) die Sperre gibt in der Trennstellung des Leistungsschalters die Blende (50) frei,
d) die Steuerwelle (5) ist durch die Gewindespindel (2) mittels eines Schrittschaltwerks in mindestens zwei Stellungen (I, II) einstellbar, von denen eine Stellung der geschlossenen und mindestens eine Stellung der geöffneten Blende (50) entspricht, und
e) in der Traverse (1) sind übertragungsglieder, vorzugsweise als Hebelgetriebe, vorgesehen, die die Öffnungsbewegung von der Gewindespindel (2) über das Gestänge (51) auf die Blende (50) übertragen.

2. Geschotteter Schaltschrank nach Anspruch 1,
**dadurch gekennzeichnet,**
daß das Schrittschaltwerk aus folgenden Teilen besteht:
a) einem mit der Gewindespindel (2) fest verbundenen Mitnehmer (6a),
b) einer auf der Steuerwelle (5) längsverschieblich in gleichbleibenden Abstand zu einer zum Fahrgestell (3) gehörenden Frontplatte (7) angeordneten Kurvenscheibe (65), die mit der Steuerwelle (5) durch geeignete Formgebung, zum Beispiel als Polygon oder als Vierkant drehsteif verbunden ist und durch den Mitnehmer (6a) von der Stellung I in die Stellung II und umgekehrt drehbar ist.
c) einem an der Frontplatte (7) drehbar gelagerten Sperrhebel (66), dessen Nase (15a) in den beiden Stellungen I bzw. II der Steuerwelle (5) in Rastpositionen (68) bzw. (69) der Kurvenscheibe (65) durch die Wirkung einer Feder (67) einfällt.

3. Geschotteter Schaltschrank nach Anspruch 1 und 2,
**dadurch gekennzeichnet,**
daß die Steuerwelle (5) in Stellung I, die der Trennstellung des Leistungsschalters entspricht, durch Einrasten der Nase (15a) des Sperrhebels (66) in die Rastposition (68) der Kurvenscheibe (65) und in Stellung II, die allen Zwischenstellungen und der Betriebsstellung des Leistungsschalters entspricht, durch Einrasten der Nase (15a) in die Rastposition (69) gegen Verdrehung gesichert ist.

4. Geschotteter Schaltschrank nach Anspruch 1 bis 3,
**dadurch gekennzeichnet,**
daß bei der Bewegung aus der Trenn- in die Betriebsstellung eine Drehung der Gewindespindel (2) um den Anfangsdrehwinkel (α₁) durch das Zusammenwirken von Mitnehmer (6a) und Kurvenscheibe (65) die Steuerwelle (5) aus der Stellung I in die Stellung II schwenkt, und daß die wirksame Länge (ℓ) des die Schwenkung übertragenden Bolzens (18a) der Kurvenscheibe (65) gleich oder kleiner als die Steigung der Gewindespindel (2) ist.

5. Geschotteter Schaltschrank nach Anspruch 1, 2 und 4,
**dadurch gekennzeichnet,**
daß bei der Bewegung aus der Betriebs- in die Trennstellung während der Drehung der Gewindespindel (2) um den abschließenden Drehwinkel (α₂) der Mitnehmer (6a) den Sperrhebel (66) aus der Rastposition (69) schwenkt und die Steuerwelle (5) über die Kurvenscheibe (65) aus der Stellung II in die Stellung I dreht.

6. Geschotteter Schaltschrank nach Anspruch 1,
**dadurch gekennzeichnet,**
daß das Schrittschaltwerk aus folgenden Teilen besteht:
a) je einem mit der Gewindespindel (2) fest verbundenen Mitnehmer (6a) bzw. (6b), die an gegenüberliegenden Seiten derselben befestigt sind und die die anderen Teile des Schrittschaltwerkes einschließen,
b) je einer auf der Steuerwelle (5) längsverschieblich in gleichbleibendem Abstand zueinander und zu der zum Fahrgestell (3) gehörenden Frontplatte (7) angeordneten Kurvenscheibe (8a bzw. 8b), die vorzugsweise eine gemeinsame, die Frontplatte (7) durchdringende Nabe (10) aufweisen und gegebenenfalls über diese mit der Steuerwelle (5) durch geeignete Formgebung, zum Beispiel als Polygon, Keilwelle oder Vierkant drehsteif verbunden und durch die Mitnehmer (6a bzw. 6b) jeweils in einer Richtung aus der Stellung I über die Stellung II in die Stellung III oder umgekehrt drehbar sind.
c) je einem auf verschiedenen Seiten der Frontplatte (7) drehbar gelagerten Sperrhebel (9a bzw.9b), die mit Nasen (15a bzw.15b), Bolzen oder ähnlich geformten Teilen in den Stellungen I, II oder III der Steuerwelle (5) in Rastpositionen (16 bzw.17) der jeweils zugehörigen Kurvenscheibe (8a bzw.8b) durch die Kraft von Federn einfällt.

7. Geschotteter Schaltschrank nach Anspruch 1 und 6,
**dadurch gekennzeichnet,**
daß die Steuerwelle (5) in Stellung I, die der Trennstellung des Leistungsschalters entspricht, durch Einrasten der Nase (15b) des Sperrhebels (9b) in die Rastposition (17) der Kurvenscheibe (8b), und in Stellung II, die einer beliebigen Zwischenstellung des Leistungsschalters entspricht, durch Einrasten der Nasen (15a, 15b) beider Sperrhebel (9a, 9b) in die Rastposition (16) der zugehörigen Kurvenscheibe (8a, 8b), sowie in Stellung III, die der Betriebsstellung des Leistungsschalters entspricht, durch Einrasten der Nase (15a) des Sperrhebels (9a) in die Rastposition (17) der Kurvenscheibe (8a) gegen Verdrehung gesichert ist.

8. Geschotteter Schaltschrank nach Anspruch 1, 6 und 7,
**dadurch gekennzeichnet,**
daß bei der Bewegung aus der Trenn- in die Betriebsstellung eine Drehung der Gewindespindel (2) um den Anfangsdrehwinkel (α₁) durch das Zusammenwirken von Mitnehmer (6a) und Kurvenscheibe (8a) die Steuerwelle (5) aus der Stellung I in die Stellung II schwenkt, und eine Drehung der Gewindespindel (2) um den Enddrehwinkel (α₂) durch das Zusammenwirken von Mitnehmer (6b) und Sperrhebel (9b) bzw.Kurvenscheibe (8b) zuerst die Nase (15b) aus der Rastposition (16) gehoben und anschließend die Steuerwelle (5) aus der Stellung II in die Stellung III schwenkt, daß bei der Bewegung aus der Betriebs- in die Trennstellung bei umgekehrter Drehrichtung der Gewindespindel (2) die Bewegungsschritte der Steuerwelle (5) in umgekehrter Reihenfolge stattfinden und daß die wirksame Länge (ℓ) der die Schwenkungen übertragenden Bolzen (18a, 18b) der Kurvenscheiben (8a, 8b) gleich oder kleiner als die Steigung der Gewindespindel (2) ist.

9. Geschotteter Schaltschrank nach den Ansprüchen 7 und 8,
**dadurch gekennzeichnet,**
daß am Fahrgestell (3) ein Steuerschalter (61) angebracht ist, dessen Kontakte (64a, b,c) mittels einer mechanischen Übertragung wechselweise von einer der Kurvenscheiben (8a, 8b) analog den Stellungen I, II und III verstellbar sind, wobei jeweils ein Teil der Kontakte ihre Schließstellung in der Trennstellung (64a), der Zwischenstellung (64b) bzw. der Betriebsstellung (64c) einnehmen.

10. Geschotteter Schaltschrank nach einem der Ansprüche 6, 7 oder 8,
**dadurch gekennzeichnet,**
daß die Sperrhebel (9a und 9b) von einer gemeinsamen, vorzugsweise in einem Durchbruch (34) der Frontplatte (7) angeordneten Feder (14) beaufschlagt sind.

11. Geschotteter Schaltschrank nach einem oder mehreren der Ansprüche 1 bis 8,
**dadurch gekennzeichnet,**
daß die Öffnungs- und Schließbewegungen der Blende (50), gegebenenfalls von mehreren Blenden, von der Steuerwelle (5) ausgehend über ein Kurven- oder Viergelenkgetriebe erfolgt, das mit dem Gestänge (51) in Verbindung steht.

12. Geschotteter Schaltschrank nach Anspruch 11,
**dadurch gekennzeichnet,**
daß zur Erzeugung der Öffnungsbewegung ein mit der Steuerwelle (5) drehbarer, mit einer Steuerkurve versehener Mitnehmer (28) einen an einer auf die Übertragungsglieder einwirkenden Lasche (27) befestigten, und über diese mit dem Gestänge (51) in Verbindung stehenden Bolzen (25) in einem in der Traverse (1) eingearbeiteten Kulissenabschnitt (26a) verschiebt und nach Erreichen der Offenstellung der Blende (50) in einem abgewinkelten Rastabschnitt (26b) sperrt und gegen selbsttätiges Rücklaufen sichert.

13. Geschotteter Schaltschrank nach den Ansprüchen 11 und 12,
**dadurch gekennzeichnet,**
daß zur Erzeugung der Schließbewegung ein am Mitnehmer (28) befestigter Bolzen (33) oder ähnliches in die Ausnehmung (32) der Lasche (27) eingreift und so den Bolzen (25) unter Führung in den Kulissenabschnitten (26a und 26b) in die der Schließstellung der Blende (50) entsprechende Position bringt.

14. Geschotteter Schaltschrank nach den Ansprüchen 6 und 11 bis 13,
**dadurch gekennzeichnet,**
daß der Mitnehmer (28) auch in der Stellung III der Steuerwelle (5) den Bolzen (25) im Rastabschnitt (26b) sperrt.

15. Geschotteter Schaltschrank nach einem oder mehreren der Ansprüche 1 bis 8 und 11,
**dadurch gekennzeichnet,**
daß ein mit der Steuerwelle (5) schwenkbarer Hebel (41) über eine vorzugsweise gekröpfte Koppelstange (42) formschlüssig auf die Übertragungsglieder einwirkt.

16. Geschotteter Schaltschrank nach Anspruch 15,
**dadurch gekennzeichnet,**
daß der Hebel (41) mit der Koppelstange (42) in der Stellung II der Steuerwelle (5) im Totpunktbereich steht.

17. Geschotteter Schaltschrank nach Anspruch 15,
**dadurch gekennzeichnet,**
daß der Hebel (41) mit der Koppelstange (42) in der Stellung II der Steuerwelle (5) vor dem Totpunkt und in der Stellung III im oder hinter dem Totpunkt steht.

18. Geschotteter Schaltschrank nach Anspruch 1
**dadurch gekennzeichnet,**
daß die Öffnungsbewegung der Blenden (50) während der Anfangsumdrehung der Gewindespindel (2) über einen Kurventrieb auf die Übertragungsglieder erfolgt.

19. Geschotteter Schaltschrank nach Anspruch 1 und 18,
**dadurch gekennzeichnet,**
daß eine mit der Gewindespindel (2) verbundene Kurvenscheibe (43) einen in der Traverse (1) gelagerten Hebel (44) verschwenkt und der Hebel (44) mit einer Klinke (45) in der Offenstellung der Blenden (50) mit einem in der Traverse (1) drehbar gelagerten, unter der Wirkung einer Feder (48) stehenden Sperrhebel (46) verklinkt.

20. Geschotteter Schaltschrank nach einem oder mehreren der Ansprüche 1 bis 8 und 18 und 19,
**dadurch gekennzeichnet,**
daß ein Nocken (47), der mit der Steuerwelle (5) verbunden ist, den Sperrhebel (46) in der Stellung I in entklinkter Stellung A hält, während er in der Stellung II und gegebenenfalls der Stellung III sich an der Klinke (45) oder einem anderen zum Hebel (44) gehörenden Abschnitt oder einem ortsfest in der Traverse (1) angebrachten Teil abstützt und in dieser Stellung B verklinkbar ist.

21. Geschotteter Schaltschrank nach Anspruch 19,
**dadurch gekennzeichnet,**
daß eine Feder (36) den Hebel (44) gegen die Kontur der Kurvenscheibe (43) führt.

22. Geschotteter Schaltschrank nach Anspruch 20,
**dadurch gekennzeichnet,**
daß die Kurvenscheibe (43) den Hebel (44) mit der Klinke (45) nach der Umschaltung der Steuerwelle (5) von Stellung I in Stellung II zur Verklinkung mit den Sperrhebel (46) führt.

23. Geschotteter Schaltschrank nach Anspruch 1 und 11 und einem oder mehreren der Ansprüche 12 bis 22,
**dadurch gekennzeichnet,**
daß in der Traverse (1) mindestens ein Hebel (20, 44) in einem Drehpunkt (31) gelagert ist, der die von der Gewindespindel (2) oder Steuerwelle (5) eingeleitete Bewegung über eine bei der Ausfahrt des Leistungsschalters aus dem Schaltschrank nach Lösen der Traverse (1) trennbare Kupplungsstelle auf das Gestänge (51) überträgt.

24. Geschotteter Schaltschrank nach Anspruch 23,
**dadurch gekennzeichnet,**
daß die Kupplungsstelle aus einem mit dem Hebel (20, 44) verbundenen Finger (35) und einer mit einer in vertikaler Richtung bewegbaren Stange (23) verbundenen, den Finger (35) in zwei Richtungen formschlüssig umgebenden Klaue (29) oder einem an den Finger (35) in Öffnungsrichtung formschlüssig anliegenden Mitnehmer(24) besteht.

25. Geschotteter Schaltschrank nach jedem der Ansprüche 2 bis 8,
**dadurch gekennzeichnet,**
daß die Mitnehmer (6a, 6b) identisch sind und die Bolzen (18a, 18b) in einer radial gerichteten Nut (37) mit sich verbreiternder, in Auslaufrichtung leicht gekrümmter Mündung führen, wobei eine Begrenzung (38) der Mündung, die zu Beginn des Enddrehwinkels (α₂) mit einem der Sperrhebel (9a, 9b) zusammenwirkt, nockenförmig ausgebildet und länger als die andere Begrenzung ist.

26. Geschotteter Schaltschrank nach einem oder mehreren der Ansprüche 1 bis 25,
**dadurch gekennzeichnet,**
daß als Fahrgestell (3) ein Einschub auf besonderen Laufschienen vorgesehen ist und ein unter dem Einschub gebildeter, vorzugsweise gegen letzteren abgeschotteter Raum ein Teil des Anschlußbereichs mit getrennter Kapselung ist.

## Claims

1. Partitioned switchgear cubicle comprising a power switch movable between a disconnecting position and an operating position, the insertion contacts of said switch being contactable with counter contacts in the busbar and terminal region,
- comprising at least one diaphragm (50), which releases openings in the partition wall (52) in the operating position for the passage of the insertion contacts and closes said openings in the disconnecting position, and which is operable as a function of the movement of the power switch via a rod system (51), and comprising a worm gear, which generates the movement of the power switch and whose threaded spindle (2) rotatable for example by a hand crank (19) is fixed in the axial direction in a traverse (1) detachably arranged in the housing of the switchgear cubicle and whose nut (4) is secured to an undercarriage (3) accommodating the power switch,
characterised by the following features:
a) the opening of the diaphragm (50) is effected by the rotation of the threaded spindle (2) during the initial angle of rotation (α₁),
b) the open diaphragm (50) is held open by a lock which is controlled by a control shaft (5) rotatably mounted in the traverse (1) and immovably secured in the axial direction,
c) the lock releases the diaphragm (50) when the power switch is in the disconnecting position,
d) the control shaft (5) can be adjusted by the threaded spindle (2) by means of a step-by-step mechanism between at least two positions (I, II), one position corresponding to the closed diaphragm (50) and at least one position corresponding to the open diaphragm, and
e) transmission elements, preferably lever gears, are provided in the traverse (1) and transmit the opening movement from the threaded spindle (2) via the rod system (51) to the diaphragm (50).

2. Partitioned switchgear cubicle, characterised in that the step-by-step mechanism comprises the following components:
a) a driving element (6a) securely connected with the threaded spindle (2),
b) a cam disc (65) arranged on the control shaft (5) so as to be longitudinally displaceable at a constant distance from a front plate (7) belonging to the undercarriage (3), the cam disc being rotationally rigidly connected with the control shaft (5) by suitable shaping, for example a polygon or square, and being rotatable from position I to position II and vice versa by the driving element (6a),
c) a locking lever (66), which is rotatably mounted on the front plate (7) and whose nose (15a) in both positions I and II of the control shaft (5) falls into locking positions (68) and (69) respectively of the cam disc (65) under the action of a spring (67).

3. Partitioned switchgear cubicle according to claims 1 and 2, characterised in that the control shaft (5) is secured against rotation in position I, which corresponds to the disconnecting position of the power switch, by the nose (15a) of the locking lever (66) locking in the locking position (68) of the cam disc (65) and is secured against rotation in position II, which corresponds to all intermediate positions and the operating position of the power switch, by the nose (15a) locking in the locking position (69).

4. Partitioned switchgear cubicle according to claims 1 to 3, characterised in that, with the movement from the disconnecting position into the operating position, as a result of the cooperation of the driving element (6a) and cam disc (65), a rotation of the threaded spindle (2) through the initial angle of rotation (α₁) pivots the control shaft (5) from position I into position II, and the effective length (l) of the bolt (18a) of the cam disc (65) transmitting the pivoting movement is equal to or smaller than the pitch of the threaded spindle (2).

5. Partitioned switchgear cubicle according to claims 1, 2 and 4, characterised in that, with the movement from the operating position into the disconnecting position, during the rotation of the threaded spindle (2) through the final angle of rotation (α₂), the driving element (16a) pivots the locking lever (66) out of the locking position (69) and rotates the control shaft (5) via the cam disc (65) out of position II into position I.

6. Partitioned switchgear cubicle according to claim 1, characterised in that the step-by-step mechanism comprises the following components:
a) driving elements (6a and 6b respectively), which are securely connected in each case with the threaded spindle (2) on opposite ends thereof and which enclose the other parts of the step-by-step mechanism,
b) cam discs (8a and 8b respectively) longitudinally displaceably arranged on the control shaft at a constant distance from one another and from the front plate (7) belonging to the undercarriage (3), said cam discs preferably comprising a common hub (10) penetrating the front plate (7) and optionally being rotationally rigidly connected via said hub with the control shaft (5) by means of suitable shaping, for example a polygon, splined shaft or square, and being rotatable by the driving elements (6a, 6b) in each case in a direction from position I via position II into position III or vice versa,
c) locking levers (9a and 9b respectively), which are rotatably mounted on different sides of the front plate (7) and which in positions I, II or III of the control shaft (5) fall with noses (15a, 15b), bolts or the like into locking positions (16, 17) of the respective associated cam disc (8a, 8b) under the action of springs.

7. Partitioned switchgear cubicle according to claims 1 and 6, characterised in that the control shaft (5) is secured against rotation in position I, which corresponds to the disconnecting position of the power switch, by the nose (15b) of the locking lever (9b) locking in the locking position (17) of the cam disc (8b), and in position II, which corresponds to any intermediate position of the power switch, by the noses (15a, 15b) of both locking levers (9a, 9b) locking in the locking position (16) of the associated cam disc (8a, 8b), and in position III, which corresponds to the operating position of the power switch, by the nose (15a) of the locking lever (9a) locking in the locking position (17) of the cam disc (8a).

8. Partitioned switchgear cubicle according to claims 1, 6 and 7, characterised in that, with the movement from the disconnecting position into the operating position, as a result of the cooperation of the driving element (6a) and the cam disc (8a), a rotation of the threaded spindle (2) through the initial angle of rotation (α₂) pivots the control shaft (5) out of position I into position II, and as a result of the cooperation of the driving element (6b) and the locking lever (9b), a rotation of the threaded spindle (2) through the final angle of rotation (α₂) firstly lifts the nose (15b) from the locking position (16) and subsequently pivots the control shaft (5) out of position II into position III, and during the movement from the operating position into the disconnecting position with a reverse direction of rotation of the threaded spindle (2), the movement steps of the control shaft (5) take place in reverse sequence and the effective length (l) of the bolts (18a, 18b) of the cam discs (8a, 8b) transmitting the pivoting movements is equal to or smaller than the pitch of the threaded spindle (2).

9. Partitioned switchgear cubicle according to claims 7 and 8, characterised in that arranged on the undercarriage (3) is a control switch (61), whose contacts (64a, b, c) are alternately adjustable via mechanical transmission by one of the cam discs (8a, 8b) analogous to positions I, II and III, one part of the contacts in each case adopting its closed position in the disconnecting position (64a), the intermediate position (64b) and the operating position (64c) respectively.

10. Partitioned switchgear cubicle according to one of claims 6, 7 or 8, characterised in that the locking levers (9a and 9b) are acted upon by a common spring (14) preferably arranged in an aperture (34) in the front plate (7).

11. Partitioned switchgear cubicle according to one or more of claims 1 to 8, characterised in that the opening and closing movements of the diaphragm (50), optionally of a plurality of diaphragms, are effected from the control shaft (5) via a cam gear or four-bar gear, which is connected with the rod system (51).

12. Partitioned switchgear cubicle according to claim 11, characterised in that, for generating the opening movement, a driving element (28) rotatable with the control shaft (5) and provided with a cam displaces a bolt (25), which is secured to a bracket (27) acting upon the transmission elements and is connected via said bracket with the rod system (51), within a slide section (26a) formed in the traverse (1) and once the diaphragm (50) reaches the open position locks the bolt in an angled locking section (26b) and secures said bolt against automatic return.

13. Partitioned switchgear cubicle according to claims 11 and 12, characterised in that, for generating the closing movement, a bolt (33) or the like secured to the driving element (28) engages in the recess (32) in the bracket (27) and thus displaces the bolt (25) guided in the slide sections (26a and 26b) into the position corresponding to the closed position of the diaphragm (50).

14. Partitioned switchgear cubicle according to claims 6 and 11 to 13, characterised in that the driving element (28) also locks the bolt (25) in the locking section (26b) when the control shaft (5) is in position II.

15. Partitioned switchgear cubicle according to one or more of claims 1 to 8 and 11, characterised in that a lever (41) pivotable with the control shaft (5) acts upon the transmission elements in a positive-locking manner via a preferably cranked coupling rod (42).

16. Partitioned switchgear cubicle according to claim 15, characterised in that the lever (41) with the coupling rod (42) is in the dead centre area when the control shaft (5) is in position II.

17. Partitioned switchgear cubicle according to claim 15, characterised in that the lever (41) with the coupling rod (42) is in front of dead centre when the control shaft (5) is in position II and is in or behind dead centre when the control shaft (5) is in position III.

18. Partitioned switchgear cubicle according to claim 1, characterised in that the opening movement of the diaphragm (50) is transmitted during the initial rotation of the threaded spindle (2) via a cam drive to the transmission elements.

19. Partitioned switchgear cubicle according to claims 1 and 18, characterised in that a cam disc (43) connected with the threaded spindle (2) pivots a lever (44) mounted in the traverse (1) and the lever (44) in the open position of the diaphragm (50) interlocks via a pawl (45) with a locking lever (46) rotatably mounted in the traverse (1) and acted upon by a spring (48).

20. Partitioned switchgear cubicle according to one or more of claims 1 to 8 and 18 and 19, characterised in that a cam (47), which is connected with the control shaft (5), holds the locking lever (46) in the unlocked position A in position I, whilst in position II and optionally in position III the lever (44) rests against the pawl (45) or another section of the lever (44) or a part immovably fixed in the traverse (1) and is interlockable in this position B.

21. Partitioned switchgear cubicle according to claim 19, characterised in that a spring (36) guides the lever (44) against the contour of the cam disc (43).

22. Partitioned switchgear cubicle according to claim 20, characterised in that, after the control shaft (5) switches from position I to position II, the cam disc (43) guides the lever (44) with the pawl (45) to interlock with the locking lever (46).

23. Partitioned switchgear cubicle according to claims 1 and 11 and one or more of claims 12 to 22, characterised in that at least one lever (20, 44) is mounted in the traverse (1) in a pivot (31), which transmits the movement introduced by the threaded spindle (2) or control shaft (5) to the rod sytsem (51) via a coupling site, which is detachable from the switchgear cubicle after releasing the traverse (1) when the power switch is withdrawn.

24. Partitioned switchgear cubicle according to claim 23, characterised in that the coupling site comprises a finger (35) connected with the lever (20, 44) and a claw (29) connected with a rod (23) movable in the vertical direction and enclosing the finger (35) in positive-locking fashion in two directions or a driving element (24) resting in positive-locking fashion against the finger (35) in the direction of opening.

25. Partitioned switchgear cubicle according to each of claims 2 to 8, characterised in that the driving elements (6a, 6b) are identical and guide the bolts (18a, 18b) in a radially aligned groove (37) with a diverging opening curving slightly in the direction of opening, one boundary (38) of the opening, which at the start of the final angle of rotation (α₂) cooperates with one of the locking levers (9a, 9b), being cam-shaped and being longer than the other boundary.

26. Partitioned switchgear cubicle according to one or more of claims 1 to 25, characterised in that a slide-in unit on special tracks is provided as the undercarriage (3) and a chamber formed beneath the slide-in unit and preferably partitioned therefrom forms part of the terminal area with separate housing.

## Revendications

1. Armoire de commutation compartimentée comportant un disjoncteur, déplaçable entre une position de sectionnement et une position de fonctionnement, dont les contacts d'entrée peuvent être amenés en liaison avec des contre-contacts dans la zone des barres collectrices et de branchement,
- comportant au moins un diaphragme (50) qui libère des ouvertures dans la cloison (52), en position de fonctionnement, pour le passage des contacts d'entrée et ferme celles-ci en positionnement de sectionnement et qui peut être actionné en fonction du déplacement du disjoncteur, par une tringlerie (51), et comportant un mécanisme à vis, donnant lieu au déplacement du disjoncteur, dont la broche filetée (2), pouvant tourner par exemple au moyen d'une manivelle (13), est fixée axialement dans une traverse (1), montée de manière amovible sur le châssis de l'armoire électrique et dont l'écrou (4) est fixé sur un chariot (3) logeant le disjoncteur,
caractérisée par les caractéristiques suivantes :
a) l'ouverture du diaphragme (50) se fait par rotation de la broche filetée (2) pendant l'angle de rotation initial (α1),
b) le diaphragme (50) ouvert est maintenu ouvert par un dispositif de blocage qui est commandé par un arbre de commande (5) monté tournant dans la traverse (1) et fixé dans la direction axiale,
c) le dispositif de blocage libère le diaphragme (50) dans la position de fonctionnement du disjoncteur,
d) l'arbre de commande (5) est réglable par la broche filetée (2) au moyen d'un mécanisme pas à pas dans au moins deux positions (I, II), dont une correspond au diaphragme (50) fermé et au moins une position au diaphragme (50) ouvert et
e) des organes de transmission, de préférence sous la forme de mécanismes à levier, sont prévus dans la traverse (1) pour transmettre le déplacement d'ouverture de la broche filetée (2) au diaphragme (50), par la tringlerie (51).

2. Armoire selon la revendication 1,
caractérisée
en ce que le mécanisme pas à pas est constitué des éléments suivants :
a) d'un entraineur (6a) relié de façon fixe à la broche filetée (2),
b) d'un disque à cames (65) placé coulissant longitudinalement sur l'arbre de commande (5), à une distance constante d'une plaque avant (7) faisant partie du chariot (3), lequel disque à cames est assemblé fixe en rotation avec l'arbre de commande (5), par une forme appropriée, par exemple en polygone ou en carré, et peut être mis en rotation par l'entraîneur (6a), de la position I à la position II et inversement,
c) d'un levier de blocage (66), monté tournant sur la plaque avant (7) et dont l'ergot (15a) dans les deux positions I ou II de l'arbre de commande (5), s'engage dans des position d'encliquetage (68 ou 69) du disque à cames (65), sous l'effet d'un ressort (67).

3. Armoire selon les revendications 1 et 2,
caractérisée
en ce que l'arbre de commande (5) en position I, qui correspond à la position de sectionnement du disjoncteur, est bloqué contre la rotation par encliquetage de l'ergot (15a) du levier de blocage (66) dans la position d'encliquetage (68) du disque à cames (65) et dans la position II, qui correspond à toutes les positions intermédiaires et à la position de fonctionnement du disjoncteur, par encliquetage de l'ergot (15a) dans la position d'encliquetage (69).

4. Armoire selon les revendications 1 à 3,
caractérisée
en ce que lors du déplacement de la position de sectionnement dans la position de fonctionnement, une rotation de la broche filetée (2) autour de l'angle de rotation initial (α1) fait pivoter l'arbre de commande (5) de la position I dans la position II, par coopération de l'entraîneur (6a) et du disque à cames (65) et en ce que la longueur utile (ℓ) de l'axe (18a), transmettant le pivotement, du disque à cames (65), est égale ou inférieure au pas de la broche filetée (2).

5. Armoire selon les revendications 1, 2 et 4,
caractérisée
en ce que lors du déplacement de la position de fonctionnement dans la position de sectionnement, pendant la rotation de la broche filetée (2) autour de l'angle de rotation définitif (α₂), l'entraîneur (6a) fait pivoter le levier de blocage (66) hors de sa position d'encliquetage (69) et fait tourner l'arbre de commande (5), par le disque à cames (65), de la position II dans la position I.

6. Armoire selon la revendication 1,
caractérisée
en ce que le mécanisme pas à pas est constitué des éléments suivants :
a) des entraîneurs respectifs (6a) ou (6b), reliés de manière fixe à la broche filetée (2) lesquels entraîneurs sont fixés sur des côtés opposés de celle-ci et qui enferment les autres éléments du mécanisme pas à pas,
b) d'un disque à cames respectif (8a) ou (8b), coulissant longitudinalement sur l'arbre de commande (5), à une distance constante l'un de l'autre et de la plaque avant (7) faisant partie du chariot (3), les disques à cames présentant de préférence un moyeu (10) commun, traversant la plaque avant (7) et étant, le cas échéant, reliés fixes en rotation, par l'intermédiaire de celui-ci, avec l'arbre de commande (5), par une forme appropriée, par exemple un polygone, un arbre cannelé ou un carré et pouvant être mis en rotation, par les entraîneurs (6a) ou (6b), chacun dans un sens, de la position I à la position III, en passant par la position II ou inversement,
c) d'un levier de commande respectif (9a) ou (9b), monté tournant sur différents côtés de la plaque avant (7), lesquels leviers s'engagent, sous l'effet de ressorts, avec des ergots (15a) ou (15b), des tiges ou des pièces de forme similaire, dans les positions I, II ou III de l'arbre de commande (5), dans des positions d'encliquetage (16) ou (17) du disque à cames correspondant (8a) ou (8b).

7. Armoire selon les revendications 1 et 6,
caractérisée
en ce que l'arbre de commande (5) en position I qui correspond à la position de sectionnement du disjoncteur, est bloqué en rotation par encliquetage de l'ergot (15b) du levier de blocage (9b) dans la position d'encliquetage (17) du disque à cames (8b), et en position II qui correspond à une position intermédiaire quelconque du disjoncteur, par encliquetage des ergots (15a, 15b) des deux leviers de blocage (9a, 9b) dans la position d'encliquetage (16) du disque à cames (8a, 8b) correspondant, ainsi qu'en position III qui correspond à la position de fonctionnement du disjoncteur, par encliquetage de l'ergot (15a) du levier de blocage (9a), dans la position d'encliquetage (17) du disque à cames (8a).

8. Armoire selon les revendications 1, 6 et 7,
caractérisée
en ce que lors du déplacement de la position de sectionnement dans la position de fonctionnement, une rotation de la broche filetée (2) autour de l'angle de rotation initial (α₁), par coopération de l'entraîneur (6a) et du disque à cames (8a), fait pivoter l'arbre de commande (5) de la position I dans la position II, et une rotation de la broche filetée (2) autour de l'angle de rotation final (α₂), par coopération de l'entraîneur (6b) et du levier de blocage (9b) ou du disque à cames (8b), soulève d'abord l'ergot (15b) de la position d'encliquetage (16) puis fait pivoter l'arbre de commande (5) de la position II dans la position III, en ce que lors du déplacement de la position de fonctionnement dans la position de sectionnement, avec sens de rotation inverse de la broche filetée (2), les pas de déplacement de l'arbre de commande (5) s'effectuent dans l'ordre inverse et en ce que la longueur utile (ℓ) des axes (18a, 18b), transmettant les pivotements, des disques à cames (8a, 8b), est égale ou inférieure au pas de la broche filetée (2).

9. Armoire selon les revendications 7 et 8,
caractérisée
en ce que sur le chariot (3) est monté un commutateur de commande (61) dont les contacts (64a, b, c) sont déplaçables au moyen d'une transmission mécanique, alternativement par l'un des disques à cames (8a, 8b), de façon analogue aux positions I, II et III, une partie des contacts prenant chaque fois leur position de fermeture dans la position de sectionnement (64), la position intermédiaire (64b) ou la position de fonctionnement (64c).

10. Armoire selon l'une des revendications 6, 7 ou 8,
caractérisée
en ce que les leviers de blocage (9a) et (9b) sont soumis a l'action d'un ressort (14) commun, placé de préférence dans un ajour (34) de la plaque avant (7).

11. Armoire selon une ou plusieurs des revendications 1 à 8,
caractérisée
en ce que les déplacements d'ouverture et de fermeture du diaphragme (50), éventuellement de plusieurs diaphragmes, partant de l'arbre de commande (5), s'effectuent par un mécanisme à cames ou à quadrilatère articulé qui est en liaison avec la tringlerie (51).

12. Armoire selon la revendication 11,
caractérisée
en ce que pour produire le déplacement d'ouverture un entraîneur (28) tournant avec l'arbre de commande (5), pourvu d'une came de commande déplace un axe (25) fixé sur une patte (27) agissant sur les organes de transmission, et en liaison, par celle-ci, avec la tringlerie (51), dans une partie de coulisse (26a) pratiquée dans la traverse (1), et après que la position ouverte du diaphragme (50) a été obtenue, le bloque dans une partie d'encliquetage (26b) coudée et empêche son retour automatique.

13. Armoire selon les revendications 11 et 12,
caractérisée
en ce que pour produire le déplacement de fermeture, un axe (33) ou similaire, fixé sur l'entraîneur (28), s'engage dans l'évidement (32) de la patte (27) et amène ainsi dans la position correspondant à la position de fermeture du diaphragme (50), l'axe (25), par guidage dans les parties de coulisse (26a) et (26b).

14. Armoire selon les revendications 6 et 11 à 13,
caractérisée
en ce que l'entraîneur (28) bloque l'axe (25) dans la partie d'encliquetage (26b), même en position III de l'arbre de commande (5).

15. Armoire selon une ou plusieurs des revendications 1 à 8 et 11,
caractérisée
en ce qu'un levier (41), pivotant avec l'arbre de commande (5), agit sur les organes de transmission, par concordance de forme, par l'intermédiaire d'une tige d'accouplement (42), de préférence coudée.

16. Armoire selon la revendication 15,
caractérisée
en ce que le levier (41) avec la tige d'accouplement (42), se trouve dans la zone de point mort, dans la position II de l'arbre de commande (5).

17. Armoire selon la revendication 15,
caractérisée
en ce que le levier (41) avec la tige d'accouplement (42) se trouve, en position II de l'arbre de commande (5), devant le point mort et en position III, dans ou derrière le point mort.

18. Armoire selon la revendication 1,
caractérisée
en ce que le déplacement d'ouverture des diaphragmes (50) pendant la rotation initiale de la broche filetée (2), s'effectue par un mécanisme à cames sur les organes de transmission.

19. Armoire selon les revendications 1 et 18,
caractérisée
en ce qu'un disque à cames (43), relié à la broche filetée (2), fait pivoter un levier (44), monté dans la traverse (1), et en ce que le levier (44) avec un cliquet (45) s'encliquette, en position ouverte des diaphragmes (50), avec un levier de blocage (46) monté tournant dans la traverse (1), soumis à l'action d'un ressort (48).

20. Armoire selon une ou plusieurs des revendications 1 à 8 et 18 et 19,
caractérisée
en ce qu'une came (47) qui est reliée à l'arbre de commande (5), maintient le levier de blocage (46) dans la position I, dans la position A non encliquetée, tandis qu'en position II et éventuellement en position III, il prend appui contre le cliquet (45) ou une autre portion faisant partie du levier (44) ou un élément monté fixe dans la traverse (1) et peut être encliqueté dans cette position B.

21. Armoire selon la revendication 19,
caractérisée
en ce qu'un ressort (36) guide le levier (44) contre le contour du disque à cames (43).

22. Armoire selon la revendication 20,
caractérisée
en ce que le disque à cames (43) guide le levier (44) avec le cliquet (45), après commutation de l'arbre de commande (5), de la position I dans la position II, en vue de l'encliquetage avec le levier de blocage (46).

23. Armoire selon les revendications 1 et 11 et une ou plusieurs des revendications 12 à 22,
caractérisée
en ce que dans la traverse (1), en un point de rotation (31), il est monté au moins un levier (20, 44) qui transmet le déplacement, amorcé par la broche filetée (2) ou l'arbre de commande (5), à la tringlerie (51), par l'intermédiaire d'un point d'accouplement séparable lors de l'extraction du disjoncteur hors de l'armoire de commutation après enlèvement de la traverse (1).

24. Armoire selon la revendication 23,
caractérisée
en ce que le point d'accouplement est constitué d'un doigt (35), relié au levier (20, 44), et d'une griffe (29) reliée à une tringle (23), déplaçable verticalement, entourant le doigt (35), par concordance de forme, dans deux directions ou est constitué par un entraîneur (24) s'appliquant par concordance de forme contre le doigt (35), dans le sens de l'ouverture.

25. Armoire selon chacune des revendications 2 à 8,
caractérisée
en ce que les entraîneurs (6a, 6b) sont identiques et guident les tiges (18a, 18b) dans une rainure (37), dirigée radialement, avec une embouchure s'élargissant, légèrement courbée dans le sens de la sortie, une délimitation (38) de l'embouchure qui coopère au début de l'angle de rotation final (α₂) avec l'un des leviers de blocage (9a, 9b), étant en forme de came et plus longue que l'autre délimitation.

26. Armoire selon une ou plusieurs des revendications 1 à 25,
caractérisée
en ce qu'il est prévu comme chariot (3) un tiroir sur des rails de roulement spéciaux et en ce qu'un compartiment formé sous le tiroir, de préférence cloisonné par rapport à ce dernier, fait partie de la zone de branchement avec blindage séparé.
